# EUROPEAN PATENT APPLICATION

(11) **EP 4 578 813 A1**
(43) Date of publication of application: **02.07.2025**
(21) Application number: 23871726.8
(22) Date of filing: 31.08.2023
(51) Int. Cl.: B66C 13/16, B66C 23/88

(54) **CONSTRUCTION PLANNING ASSISTANCE DEVICE AND PROGRAM**

(30) Priority: 30.09.2022 JP 2022158907
(71) Applicant: KOBELCO CONSTRUCTION MACHINERY CO., LTD., Hiroshima-shi, Hiroshima 731-5161 (JP)
(72) Inventor: TAKAMATSU, Nobuhiro, Shinagawa-ku 141-8626 (JP); TANAKA, Kiyokazu, Shinagawa-ku 141-8626 (JP); OKADA, Satoshi, Shinagawa-ku 141-8626 (JP)
(74) Representative: TBK
(86) International application number: PCT/JP2023/031888
(87) International publication number: WO 2024/070486

(57) **Abstract**

A construction planning assistance system includes: a first acquisition part that acquires information about at least one component model designated from a component model group that constitutes a building model corresponding to a building, having a three-dimensional shape, and displayed in a three-dimensional virtual space; a second acquisition part that acquires information about a crane arranged in the vicinity of the building for hoisting a component constituting the building; an attaching calculation part that calculates, on the basis of the information about the at least one component model and the information about the crane, an attaching-time ground contact pressure being a ground contact pressure acting to ground where the crane is arranged in attachment of at least one component corresponding to the at least component model; and a display control part that causes a display part to display the attaching-time ground contact pressure calculated by the attaching calculation part.

## Description

### Technical Field

The present invention relates to a construction planning assistance system and a program.

### Background Art

Simulation software for calculating a ground contact pressure under a static load condition for a crane in a working posture has been conventionally proposed.

### Citation List

### Non-Patent Literature

Non-patent Literature 1: Kuren Secchiatsu simyureshon [Crane Ground Pressure Simulator], Retrieved on September 13, 2022, from http://www.hsc-cranes.com/simulation/index.php/Init/index, through the Internet

A ground contact pressure in an arrangement location for a crane needs to be calculated for determination as to whether to protect or guard ground to support the crane thereon. Unfortunately, such conventional simulation software as aforementioned demands a lot of input items, and thus is complicated. The software further requires confirmation on a plurality of matters under strict conditions for numeral values to be input, that is, requires knowledge based on experience of an expert or skilled person.

### Summary of Invention

An object of the present invention is to provide a construction planning assistance system or other system that enables an easy grasp of a ground contact pressure required for determination as to whether to protect ground.

The present invention provides a construction planning assistance system. The construction planning assistance system includes: a first acquisition part that acquires information about at least one component model designated from a component model group that constitutes a building model corresponding to a building, having a three-dimensional shape, and displayed in a three-dimensional virtual space; a second acquisition part that acquires information about a crane arranged in the vicinity of the building for hoisting a component constituting the building; an attaching calculation part that calculates, on the basis of the information about the at least one component model acquired by the first acquisition part and the information about the crane acquired by the second acquisition part, an attaching-time ground contact pressure being a ground contact pressure acting to ground where the crane is arranged in attachment of at least one component corresponding to the at least component model by the crane; and a display control part that causes a display part to display the attaching-time ground contact pressure calculated by the attaching calculation part.

The present invention further provides a program that includes causing a computer to execute predetermined operations. The program covers executions of the operations including: first acquisition of acquiring information about at least one component model designated from a component model group that constitutes a building model corresponding to a building, having a three-dimensional shape, and displayed in a three-dimensional virtual space; second acquisition of acquiring information about a crane arranged in the vicinity of the building for hoisting a component constituting the building; attaching calculation of calculating, on the basis of the information about the at least one component model acquired in the first acquisition and the information about the crane acquired in the second acquisition, an attaching-time ground contact pressure being a ground contact pressure acting to ground where the crane is arranged in attachment of at least one component corresponding to the at least one component model by the crane; and displaying of causing a display part to display the attaching-time ground contact pressure calculated in the attaching calculation.

### Brief Description of Drawings

Fig. 1 is a diagram showing an example schematic configuration of a construction planning assistance system according to a first embodiment.
Fig. 2 is a block diagram showing example operational parts of the construction planning assistance system according to the first embodiment.
Fig. 3 is a side view of an example schematic configuration of a crane.
Fig. 4 is an illustration of an example model display screen image displayed on a display part by a model display control part.
Fig. 5 is an illustration of an example state where one component model is designated.
Fig. 6 is an illustration of an example crane information screen image displayed on the display part by a crane display control part.
Fig. 7 is an illustration of an example relation between the model display screen image and the crane information screen image.
Fig. 8 is an illustration of an example ground contact pressure detail screen image displayed on the display part by a ground contact pressure display control part.
Fig. 9 is a block diagram showing example operational parts of a construction planning assistance system according to a second embodiment.
Fig. 10 is an illustration of an example component designation screen image displayed on a display part by a crane display control part.
Fig. 11 is an illustration of an example state where a plurality of component models is designated.
Fig. 12 is a table showing an example crane information screen image displayed on the display part by the crane display control part.
Fig. 13 is an illustration of an example state where one component model is designated from the component models.

### Description of Embodiments

Hereinafter, embodiments will be described with reference to the accompanying drawings.

### First Embodiment

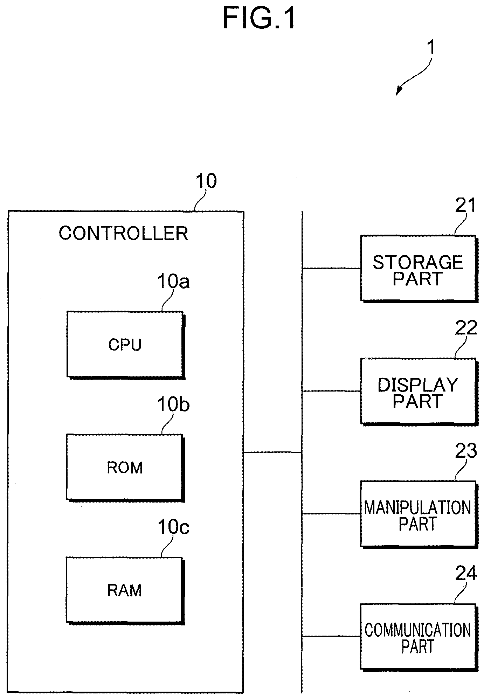

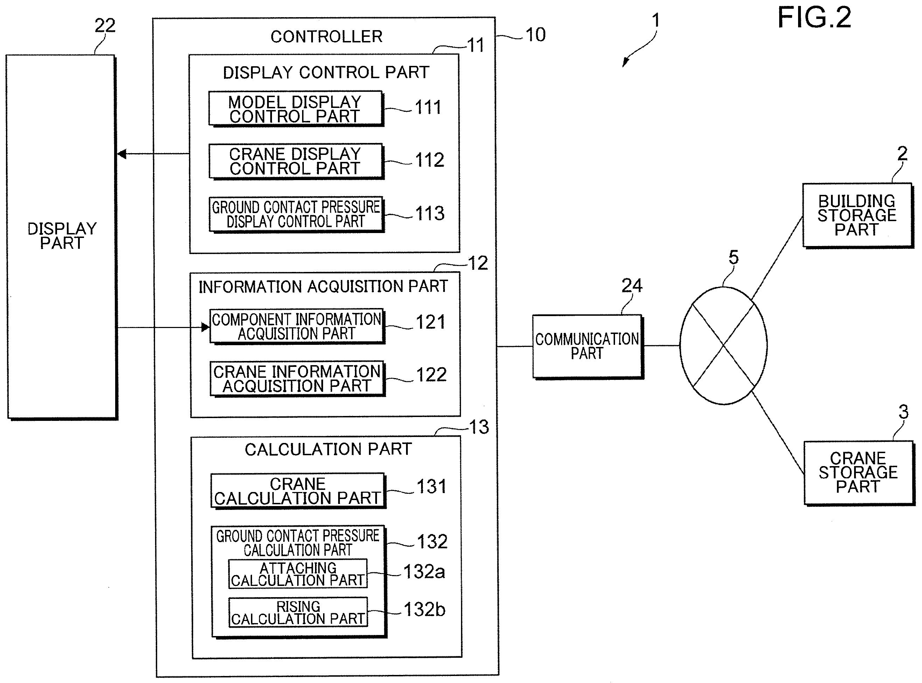

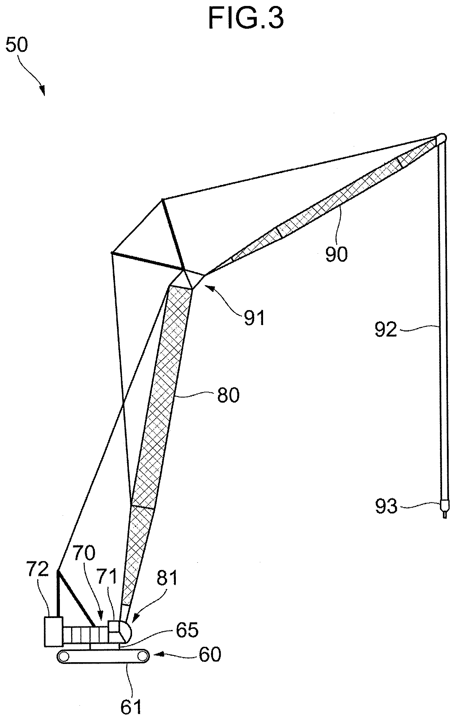

Fig. 1 is a diagram showing an example schematic configuration of a construction planning assistance system 1 according to a first embodiment. Fig. 2 is a block diagram showing example operational parts of the construction planning assistance system 1 according to the first embodiment. Fig. 3 is a side view of an example schematic configuration of a crane 50. The construction planning assistance system 1 is effective to determine whether to protect ground to support the crane 50 thereon after determination of a type and a specification of the crane 50 to construct a building or structure and determination of an arrangement location for the crane 50. Specifically, the construction planning assistance system 1 is configured to calculate a ground contact pressure onto the ground to support the crane 50 thereon and to display the calculated ground contact pressure on a display part 22. In this respect, a user can determine the necessity or unnecessity of protection of the ground for the support in consideration of enough or not enough bearing capacity of the ground to support the crane 50 thereon against the ground contact pressure displayed by the construction planning assistance system 1 and a subsidence amount of the ground falling within or being outside a permissible range.

Examples of the building here include structures fixed onto ground and having roofs and columns or walls, houses, condominiums or apartments, viaducts for highways, windmills, and other structures and buildings. A work of constructing such a building by the crane 50 includes excavation and driving of stakes into ground for laying foundation of the building in addition to hoisting and carrying of a component constituting the building.

A type, a specification, and an attachment device of the crane 50 is not particularly limited. For instance, the crane 50 is not limited to a crawler crane configured to travel with crawlers 61 to be described later, and may be a wheel crane or other mobile crane configured to travel without the crawlers 61, such as, a crane traveling with tires, a rough terrain crane, a truck crane, or an all terrain crane. Alternatively, the crane may be a fixed crane, such as a jib crane, a climbing crane, a tower crane, a luffing crane, or a fixed jib crane. The crane 50 may include a jib, a mast, and/or a strut in place of or in addition to a boom 80 to be described later for the attachment device. Examples of the boom 80 include a telescopic (extendable and contractible) boom and a lattice boom.

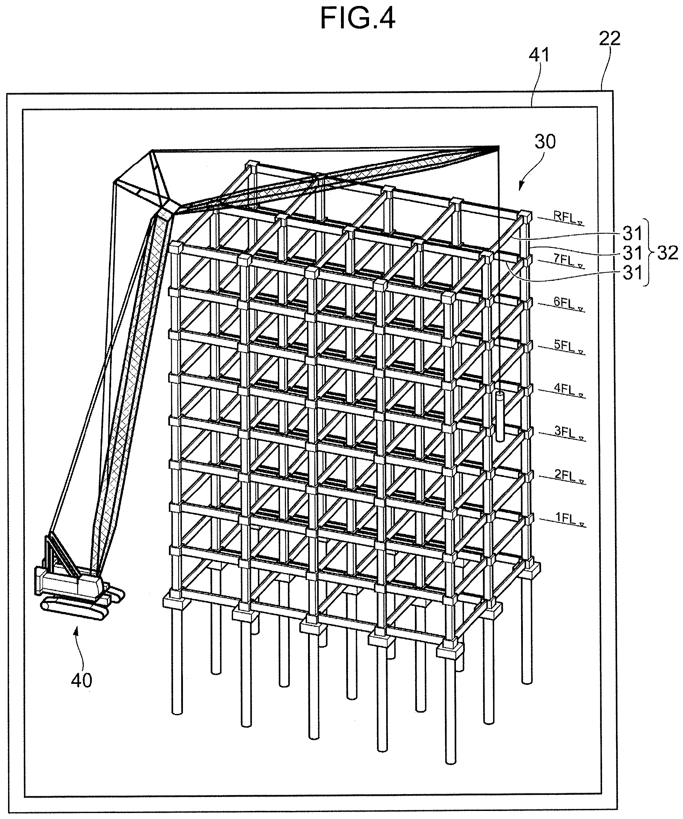

The construction planning assistance system 1 enables a calculation of a ground contact pressure by employing the Building Information Modeling (BIM). The BIM represents a way of generating a database associating a building model 30 having a three-dimensional shape (see Fig. 4) with component information including a weight, dimensions, a material, and other information about a component constituting a relevant building.

Hereinafter, the construction planning assistance system 1 will be described in detail. The construction planning assistance system 1 includes a controller 10 that controls an entirety of the system, a storage part 21 that stores data, the display part 22 that displays a manipulation receipt screen image and other images, a manipulation part 23 that receives an input manipulation from the user, and a communication part 24 that communicates with an external device.

The controller 10 includes a central processing unit (CPU) 10a, a read only memory (ROM) 10b, and a random access memory (RAM) 10c. The ROM 10b stores basic programs (operation systems) to be executed by the CPU 10a and various kinds of settings. The CPU 10a uses the RAM 10c as a working area and executes a certain application program read from the ROM 10b or the storage part 21. The CPU 10a executes the program to control each part of the construction planning assistance system 1.

Examples of the storage part 21 include a storage device, such as a semiconductor memory or a hard disk drive (HDD). The display part 22 serves as a display device configured to display a still image, a video image, and other image. Examples of the display part 22 include a liquid crystal display and an organic electro luminescence (EL) display. The manipulation part 23 serves as an input device configured to receive a manipulation from the user. Examples of the manipulation part 23 include a keyboard, a mouse, a touch screen, and a switch.

Examples of the communication part 24 include a communication interface.

The construction planning assistance system 1 is connected to a building storage part 2 and a crane storage part 3 via a network 5. The network 5 may be any communication network for data communication between devices without particular limitation, for example, may be a local area network (LAN). A communication line for the data communication may be wired or wireless, or a combination of wired communication and wireless communication may be adopted. Examples of the wireless LAN include the Wi-Fi (registered trademark) and the Bluetooth (registered trademark).

The building storage part 2 stores information about a building to establish the building model 30 (see Fig. 4). The information about the building include attribute information about positions, dimensions, materials, gravity center positions of components constituting an entirety of the building. The building model 30 is created by simulating the entirety of the building as a model on the basis of the information about the building.

The crane storage part 3 stores information about the crane 50 to establish a crane model 40 (see Fig. 4). Examples of the information about the crane 50 include a name, a type, a working radius, and dimensions of the crane 50.

The crane 50 includes a traveling body 60 having the crawlers 61, a slewing body 70 mounted on the traveling body 60, and a slewing device 65 that enables the slewing body 70 to slew with respect to the traveling body 60. The slewing body 70 has an operating compartment 71 and a counterweight 72. The crane 50 further includes the boom 80 mounted on the top of the slewing body 70 and a jib 90 extending outward from an upper distal end of the boom 80 in a tiltable manner. The boom 80 has a lower proximal end supported by the slewing body 70 in such a manner as to be tiltable about a boom foot pin 81. The jib 90 has a proximal end connected to the upper end of the boom 80 in such a manner as to be tiltable about a jib foot pin 91. The crane 50 includes a wire rope 92 extending directly downward from a distal end of the jib 90, and a hook 93 attached to a distal end of the wire rope 92.

### Controller 10

Hereinafter, operations of the controller 10 will be described.

As shown in Fig. 2, the controller 10 includes a display control part 11 that controls displaying on the display part 22, an information acquisition part 12 that acquires information, and a calculation part 13 that calculates a ground contact pressure and other parameter.

### Display control part 11

The display control part 11 has a model display control part 111 that causes the display part 22 to display the building model 30 and the crane model 40. The display control part 11 has a crane display control part 112 that causes the display part 22 to display a result of a calculation by a crane calculation part 131 to be described later. The display control part 11 further has a ground contact pressure display control part 113 that causes the display part 22 to display a result of a calculation by a ground contact pressure calculation part 132 to be described later.

### Model display control part 111

Fig. 4 is an illustration of an example model display screen image 41 displayed on the display part 22 by the model display control part 111. The model display control part 111 causes the display part 22 to display the building model 30 corresponding to the building and having the three-dimensional shape in a three-dimensional virtual space displayed in the model display screen image 41 by using the information about the building model 30 stored in the building storage part 2. The model display control part 111 further causes the display part 22 to display the crane model 40 corresponding to the crane 50 in the three-dimensional virtual space displayed in the model display screen image 41 by using the information about the crane model 40 stored in the crane storage part 3. The building model 30 illustrated in Fig. 4 includes a component model 31 corresponding to a component constituting the building. Besides, the building model 30 includes a component model group 32 including a plurality of component models 31.

### Information acquisition part 12

The information acquisition part 12 has a component information acquisition part 121 or first acquisition part that acquires, from the building storage part 2, information about one component model 31 designated from the component model group 32 that constitutes the building model 30 displayed on the display part 22. Examples of the designation of the one component model 31 from the component model group 32 may include clicking the one component model 31 by a mouse serving as an example of the manipulation part 23. Alternatively, in a case where the manipulation part 23 includes a touch screen, the designation may be made by touching the one component model 31

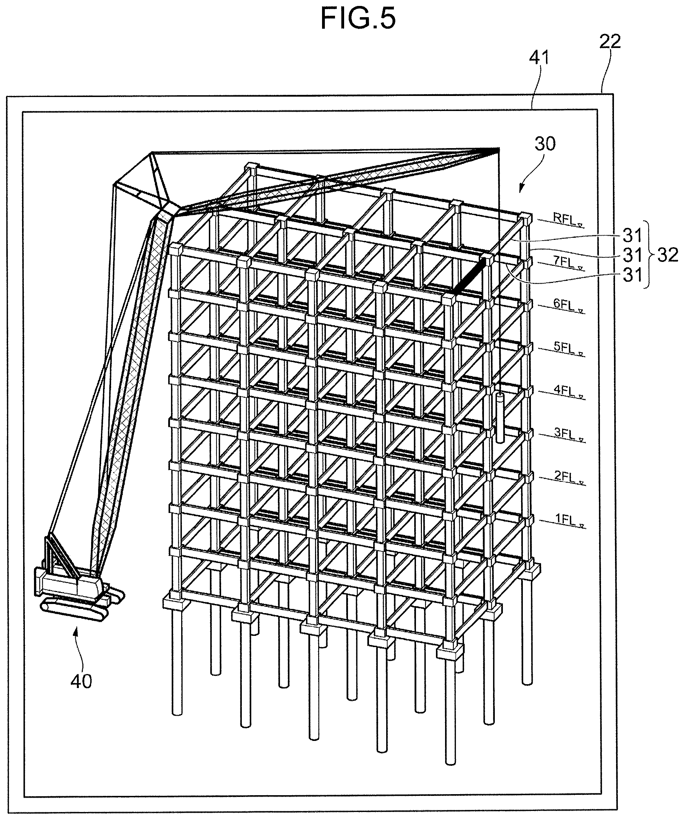

Fig. 5 is an illustration of an example state where the one component model 31 is designated. When the user designates the one component model 31 constituting the building model 30 on the model display screen image 41 displayed by the model display control part 111, the model display control part 111 displays the designated one component model 31 in a highlighted manner. In Fig. 5, the designated component model 31 is filled in black.

The information acquisition part 12 further has a crane information acquisition part 122 or second acquisition part that acquires, from the crane storage part 3, the information about the crane 50 corresponding to the crane model 40 arranged in the vicinity of the building model 30 as displayed on the display part 22.

### Calculation part 13

The calculation part 13 has the crane calculation part 131 that calculates a value related to the crane 50, such as a posture of the crane 50, on the basis of the information acquired by the information acquisition part 12, and the ground contact pressure calculation part 132 that calculates the ground contact pressure acting to the ground on which the crane 50 is supported. For instance, the calculation part 13 enables a calculation when the user designates the one component model 31 constituting the building model 30 on the model display screen image 41 displayed by the model display control part 111.

### Crane calculation part 131

The crane calculation part 131 calculates, on the basis of the information about the one component model 31 acquired by the component information acquisition part 121 and the information about the crane 50 acquired by the crane information acquisition part 122, values related to the crane 50 including the posture of the crane 50 and a load factor therefor in attachment of a component (hereinafter, referred to as a "target component" as well) corresponding to the one component model 31 by the crane 50.

### Ground contact pressure calculation part 132

The ground contact pressure calculation part 132 has an attaching calculation part 132a that calculates an attaching-time ground contact pressure acting in attachment of the target component by hoisting and lowering the target component, and a rising calculation part 132b that calculates a rising-time ground contact pressure acting in rising of the crane. Each ground contact pressure is calculatable in accordance with a certain standard, such as JIS A8509, or other standard. Alternatively, another calculation way may be employed. As illustrated in Fig. 4, the building model 30 includes a component model 31 located closer to the crane 50 and another component model 31 located away from the crane 50. The component models 31 are located at various heights from the ground surface. This means that attaching-time ground contact pressures acting to the ground differ from each other in hoisting of components respectively corresponding to the component models 31 constituting the building model 30 illustrated in Fig. 4 by the crane 50. In this respect, a grasp of each ground contact pressure before an actual work is important.

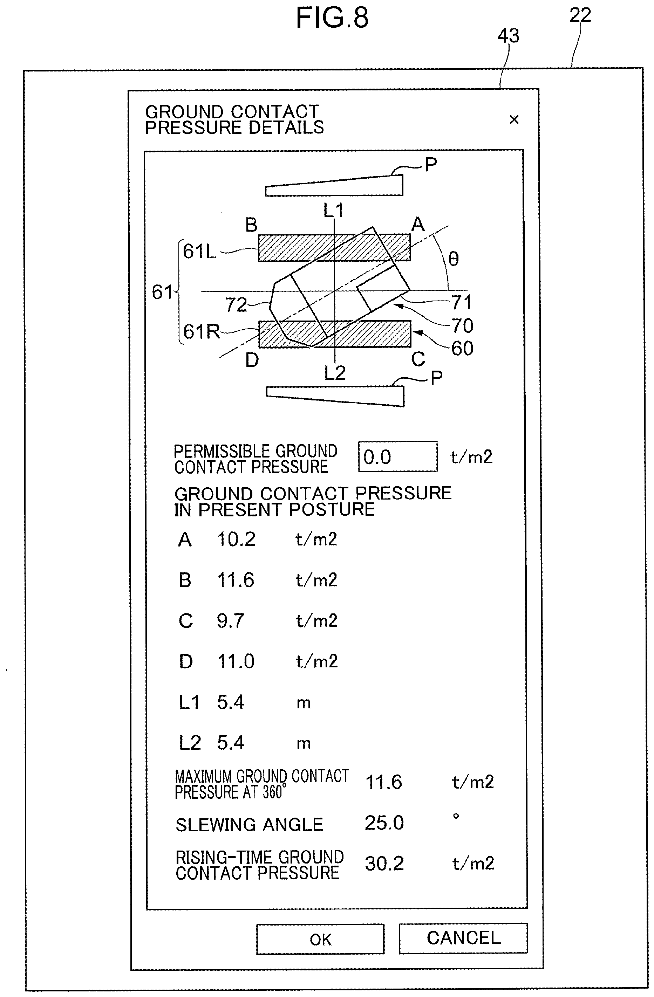

The attaching calculation part 132a calculates ground contact pressures respectively applied at four points of a front end A and a rear end B of a left crawler 61L (see Fig. 8) and a front end C and a rear end D of a right crawler 61R (see Fig. 8) when the crane 50 comes to the posture of hoisting the target component corresponding to the one component model 31 acquired by the component information acquisition part 121.

The attaching calculation part 132a further calculates a length L1 (see Fig. 8) associated with a load resulting from pressing by the left crawler 61L and a length L2 (see Fig. 8) associated with a load resulting from pressing by the right crawler 61R. The attaching calculation part 132a calculates a maximum ground contact pressure and a slewing angle under the maximum ground contact pressure when the slewing body 70 slews at 360° in the posture or state of hoisting the target component.

For instance, the attaching calculation part 132a calculates the ground contact pressure by a known way with at least any one of the posture of the crane 50, the length of the boom 80, the length of the jib 90, the weight of the hook 93, the weight of the counterweight 72, an angle of the boom 80, an angle of the jib 90, a working radius, a hoisted load (excluding the weight of the hook 93), the total weight of the crane 50 (excluding the hoisted load), and the slewing angle of the slewing body 70. Examples of the posture of the crane 50 include a luffing tower hoisting posture, a crawler crane hoisting posture, a tower crane hoisting posture.

The rising calculation part 132b calculates a rising-time ground contact pressure acting in rising. Concerning the rising, when the slewing body 70 has a slewing angle of 0°, the boom 80 and the jib 90 maximally extend and the jib 90 is closed to be located under the boom 80. For instance, the boom 80 and the jib 90 come into this state when assembled to the slewing body 70. Specifically, two ways for rising or standing of the crane 50 including the jib 90 and the boom 80 will be described below. The first way is called an inward holding way of causing the boom 80 to rise while holding the jib 90 from the state where the jib 90 is located under the boom 80. The second way is called an extraction way of causing the jib 90 to open and extend to align with the boom 80 and causing both the boom 80 and the jib 90 to stand from a state where the boom and the jib lie along the ground. Basically, in each way, the crane 50 returns from a working posture to an original state preceding to rising when the boom 80 and the jib 90 are lowered. That is to say, a ground contact pressure acts to the ground in each of the rising and the lowering in the same manner. However, the ground contact pressure in one of the ways may be higher than the ground contact pressure in the other of the ways depending on a specification of a crane. Further, in each of the ways, the ground contact pressure in rising is likely to be higher than the ground contact pressure in normal working. From these perspectives, a grasp of a rising-time ground contact pressure in advance is important.

### Crane display control part 112

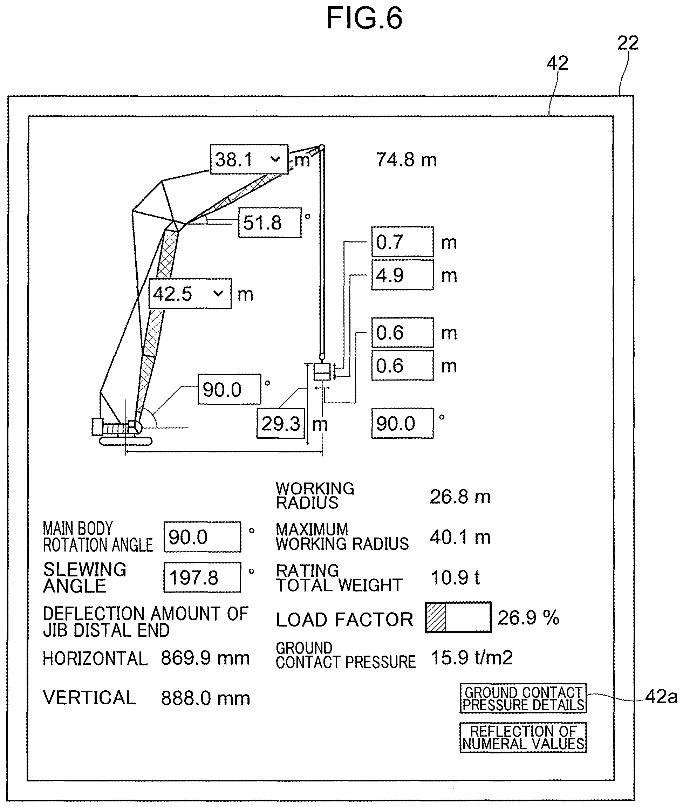

Fig. 6 is an illustration of an example crane information screen image 42 displayed on the display part 22 by the crane display control part 112. The crane display control part 112 causes the display part 22 to display a result of a calculation by the crane calculation part 131. For instance, as illustrated in Fig. 6, the crane display control part 112 displays, in the crane information screen image 42, respective values of the length of the boom 80, the length of the jib 90, an angle of the boom 80, an angle of the jib 90, a working radius, a slewing angle of the slewing body 70, a load factor, and a ground contact pressure together with their units. For example, the unit of the length is "m", the unit of the ground contact pressure is "t/m²", and the unit of the angle is "°".

The crane display control part 112 further displays a transition button 42a given with the words "ground contact pressure details" in the crane information screen image 42. In the example illustrated in Fig. 6, the crane display control part 112 displays the transition button 42a near the value of the ground contact pressure at a lower right end in the crane information screen image 42.

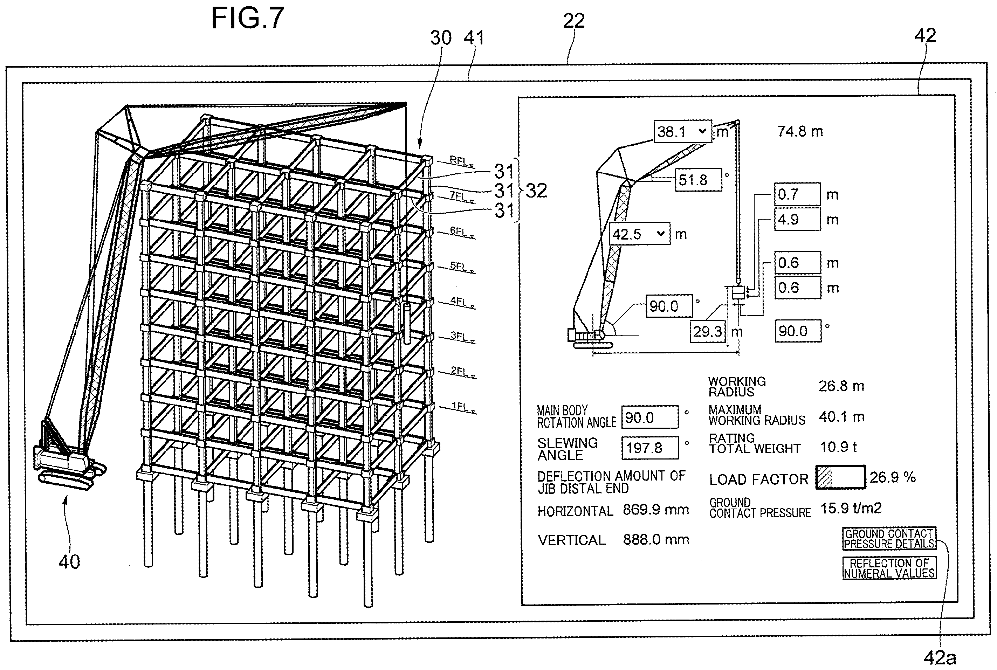

Fig. 7 is an illustration of an example relation between the model display screen image 41 and the crane information screen image 42. As illustrated in Fig. 7, for example, the crane display control part 112 displays the crane information screen image 42 by superimposing the image on the model display screen image 41 displayed by the model display control part 111. This allows the user to easily repeat designation of a certain component model 31 and confirmation of a relevant ground contact pressure. Specifically, first, the user designates one component model 31 with reference to the building model 30 displayed in the model display screen image 41 and confirms a ground contact pressure in attachment of the one component model 31, and thereafter designates another component model 31 and confirm a ground contact pressure in attachment of the another component model 31.

The crane display control part 112 may display the crane information screen image 42 and the model display screen image 41 displayed by the model display control part 111 next to each other. In other words, the model display control part 111 may display the model display screen image 41 in a left display region on the display part 22, and the crane display control part 112 may display the crane information screen image 42 in a right display region on the display part 22.

### Ground contact pressure display control part 113

Fig. 8 is an illustration of an example ground contact pressure detail screen image 43 displayed on the display part 22 by the ground contact pressure display control part 113. The ground contact pressure display control part 113 causes the display part 22 to display the ground contact pressure detail screen image 43 in response to pressing of the transition button 42a on the crane information screen image 42 (e.g., in response to clicking by a mouse serving as an example of the manipulation part 23).

As illustrated in Fig. 8, the ground contact pressure display control part 113 displays, in the ground contact pressure detail screen image 43, respective values of ground contact pressures at the four points of the front end A, the rear end B, the front end C, and the rear end D4 in a present posture, as calculated by the attaching calculation part 132a, together with the unit "t/m²" for each ground contact pressure. The ground contact pressure display control part 113 further displays, in the ground contact pressure detail screen image 43, the length L1 associated with the load resulting from pressing by the left crawler 61L and the length L2 associated with the load resulting from pressing by the right crawler 61R together with the unit "m" of each length, the lengths being calculated by the attaching calculation part 132a.

The ground contact pressure display control part 113 displays, in the ground contact pressure detail screen image 43, a schematic diagram of the traveling body 60 and the slewing body 70 in a top view of the crane 50 in a present posture, and a distribution (e.g., a trapezoidal distribution or a triangular distribution) of ground contact pressures related to the traveling body 60. This enables visual recognition of a slewing angle θ of the slewing body 70 and the distribution of the ground contact pressures in the present posture.

The ground contact pressure display control part 113 further displays, in the ground contact pressure detail screen image 43, a value of a maximum ground contact pressure at 360° being a maximum ground contact pressure calculated by the attaching calculation part 132a when the slewing body 70 slews at 360° and a slewing angle under the maximum ground contact pressure together with their respective units "t/m²" or "t/m2" and "°" or "degrees".

The ground contact pressure display control part 113 displays, in the ground contact pressure detail screen image 43, a value of a rising-time ground contact pressure calculated by the rising calculation part 132b together with the unit "t/m²" or "t/m2".

The ground contact pressure display control part 113 causes the display part to display, in the ground contact pressure detail screen image 43, a permissible ground contact pressure input in advance together with the unit "t/m²" or "t/m2". In absence of the permissible ground contact pressure, "0" is displayed as the permissible ground contact pressure.

In presence of the permissible ground contact put in advance, the ground contact pressure display control part 113 is configured to issue an alert when any of the values of the ground contact pressures at the four points of the front end A, the rear end B, the front end C, and the rear end D, the value of the maximum ground contact pressure at 360°, and the value of the rising-time ground contact pressure exceeds the permissible ground contact pressure. Example ways of issuing the alert include a way of expressing characters of the value of the ground contact pressure exceeding the permissible ground contact pressure in red and a way of showing a background of the characters of the value of the ground contact pressure exceeding the permissible ground contact pressure in red.

As described heretofore, the construction planning assistance system 1 includes the component information acquisition part 121 (serving an example of the first acquisition part) that acquires information about one component model 31 designated from the component model group 32 that constitutes the building model 30 corresponding to the building, having the three-dimensional shape, and displayed in the three-dimensional virtual space. The construction planning assistance system 1 further includes the crane information acquisition part 122 (serving as an example of the second acquisition part) that acquires information about the crane 50 arranged in the vicinity of the building for hoisting a component constituting the building. Besides, the construction planning assistance system 1 includes the attaching calculation part 132a that calculates, on the basis of the information about the one component model 31 acquired by the component information acquisition part 121 and the information about the crane 50 acquired by the crane information acquisition part 122, an attaching-time ground contact pressure being a ground contact pressure acting to the ground where the crane 50 is arranged in attachment of one component corresponding to the one component model 31 by the crane 50. Furthermore, the construction planning assistance system 1 includes the ground contact pressure display control part 113 that causes the display part 22 to display the attaching-time ground contact pressure calculated by the attaching calculation part 132a.

The construction planning assistance system 1 having this configuration enables the user to designate one component model 31 from the component model group 32 that constitutes the building model 30 having the three-dimensional shape and then confirm, on the display part 22, a ground contact pressure in attachment of one component corresponding to the designated one component model 31. The configuration thus allows the user to easily grasp a ground contact pressure required for determination as to whether to protect the ground to support the crane 50 thereon. This consequently enables easy determination on the necessity or unnecessity of protection of the ground to support the crane thereon.

Here, the attaching calculation part 132a calculates a maximum ground contact pressure when the crane 50 slews at 360° in a state of hoisting the one component. The ground contact pressure display control part 113 causes the display part 22 to display the maximum ground contact pressure. This configuration allows the user to easily grasp ground contact pressures in a plurality of states where the ground contact pressures are likely to be higher. This consequently enables determination on the necessity or unnecessity of protection of the ground for the support with high accuracy.

The construction planning assistance system 1 further includes the rising calculation part 132b that calculates a rising-time ground contact pressure acting to the ground in rising of the crane 50. The ground contact pressure display control part 113 causes the display part 22 to display the rising-time ground contact pressure calculated by the rising calculation part 132b. This configuration allows the user to easily grasp the rising-time ground contact pressure which is likely to be higher than the attaching-time ground contact pressure. This consequently enables determination on the necessity or unnecessity of protection of the ground for the support with high accuracy.

The ground contact pressure display control part 113 is configured to issue an alert when the attaching-time ground contact pressure calculated by the attaching calculation part 132a has a value exceeding a predetermined permissible ground contact pressure (serving as an example of the threshold). The ground contact pressure display control part 113 is further configured to issue an alert when the rising-time ground contact pressure calculated by the rising calculation part 132b has a value exceeding the predetermined permissible ground contact pressure (serving as an example of the threshold). This configuration allows the user to easily understand that the ground contact pressure becomes higher as the ground contact pressure exceeds the permissible ground contact pressure.

The construction planning assistance system 1 is connected to the building storage part 2 and the crane storage part 3 via the network 5 to acquire the information about the building and the information about the crane 50 via the network 5, but the acquisition way is not particularly limited thereto. Instead, the storage part 21 may store the information stored in the building storage part and the information stored in the crane storage part 3, and the controller 10 may acquire the information about the building and the information about the crane 50 from the storage part 21.

Software and hardware resources cooperatively achieve execution of the process by the controller 10 in the construction planning assistance system 1 having the configuration described above. This enables the CPU10a in the controller 10 to execute a program for each operational part of the controller 10 to thereby make the operational part come into effect. For instance, the controller 10 may be provided with a non-transitory computer readable recording medium that records a program, and the CPU10a may read out the program stored in the recording medium. In this case, the program itself read out of the recording-medium makes each operational part in the embodiment described above come into effect, and the program itself and the recording medium that records the program result in constituting the present invention. Examples of the recording medium that provides such a program include a flexible disk, a CD-ROM, a DVD-ROM, a hard disk, an optical disc, an optical magnet disc, a CD-R, a magnetic tape, a non-volatile memory card, and a ROM. The construction planning assistance system 1 may download the program via the network 5.

In addition, a program constituting the present invention includes causing a computer to execute: first acquisition of acquiring information about one component model 31 designated from a component model group 32 that constitutes a building model 30 corresponding to a building, having a three-dimensional shape, and displayed in a three-dimensional virtual space; and second acquisition of acquiring information about a crane 50 arranged in the vicinity of the building for hoisting a component constituting the building. The program constituting the present invention further includes causing the computer to execute: attaching calculation of calculating, on the basis of the information about the one component model 31 acquired in the first acquisition and the information about the crane 50 acquired in the second acquisition, an attaching-time ground contact pressure being a ground contact pressure acting to ground where the crane 50 is arranged in attachment of one component corresponding to the one component model 31 by the crane 50; and displaying of causing the display part 22 to display the attaching-time ground contact pressure calculated in the attaching calculation.

### Second Embodiment

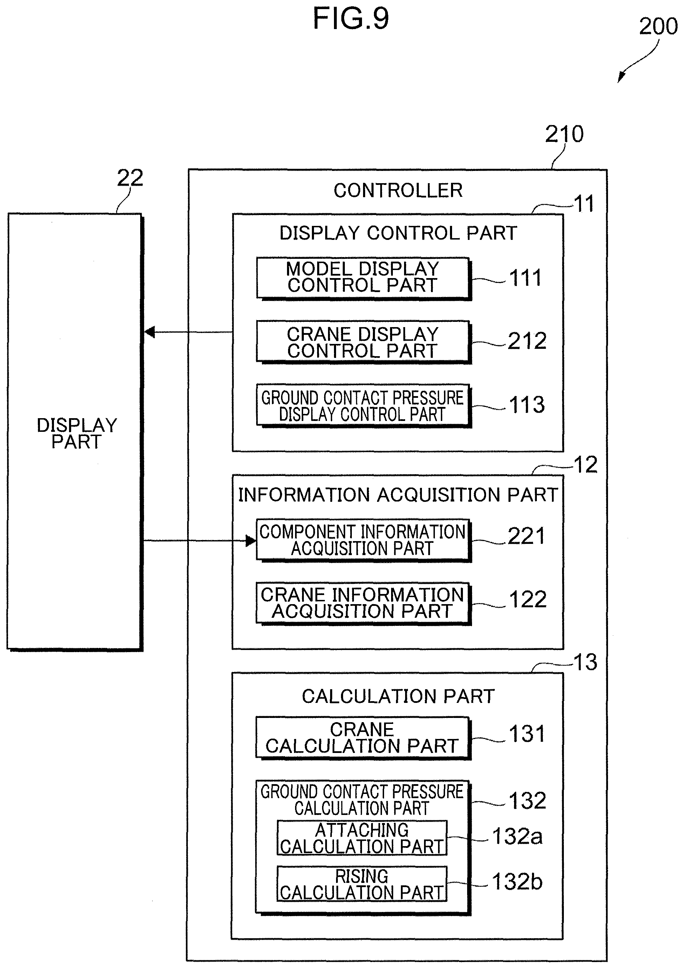

Fig. 9 is a block diagram showing example operational parts of a construction planning assistance system 200 according to a second embodiment. The construction planning assistance system 200 according to the second embodiment differs from the construction planning assistance system 1 according to the first embodiment in a controller 210 corresponding to the controller 10. Hereinafter, the differences from the first embodiment will be described. Here, the same constituent elements and configurations in the second embodiment as those in the first embodiment will be given the same reference numerals or signs, and detailed descriptions therefor will be omitted.

The controller 210 includes a crane display control part 212 corresponding to the crane display control part 112 in the first embodiment, and a component information acquisition part 221 or third acquisition part corresponding to the component information acquisition part 121 in the first embodiment.

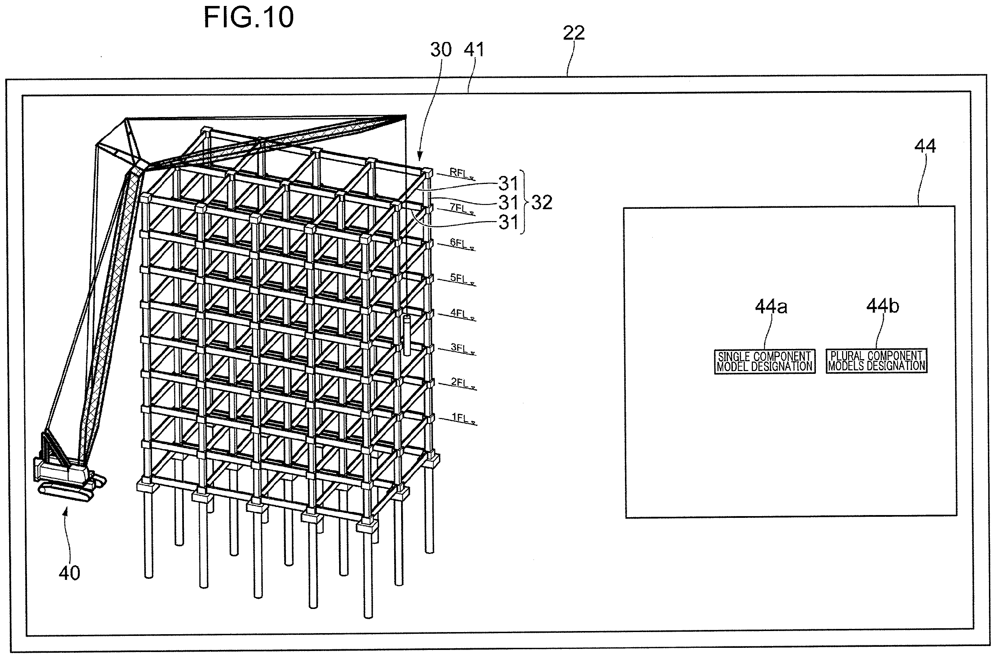

Fig. 10 is an illustration of an example component designation screen image 44 displayed on a display part 22 by the crane display control part 212. The crane display control part 212 may display the component designation screen image 44 illustrated in Fig. 10 by superimposing the image on a model display screen image 41 displayed by a model display control part 111. The component designation screen image 44 shows an acceptance button 44a given with the words "single component model designation" to accept designation of one component model 31 by a user, and an acceptance button 44b given with the words "plural component models designation" to accept designation of a plurality of component models 31 by the user. The crane display control part 212 may display the component designation screen image 44 and the model display screen image 41 next to each other.

When one component model 31 is designated from a component model group 32 that constitutes a building model 30 displayed in the model display screen image 41 on the display part 22 (e.g., when one component model is clicked by the mouse serving as an example of the manipulation part 23), the model display control part 111 displays the designated component model 31 in a highlighted manner. The component information acquisition part 221 then acquires information about the one component model 31 from a building storage part 2 in response to pressing of the acceptance button 44a (e.g., in response to clicking by a mouse serving as the manipulation part 23) in a state where the one component model 31 is designated.

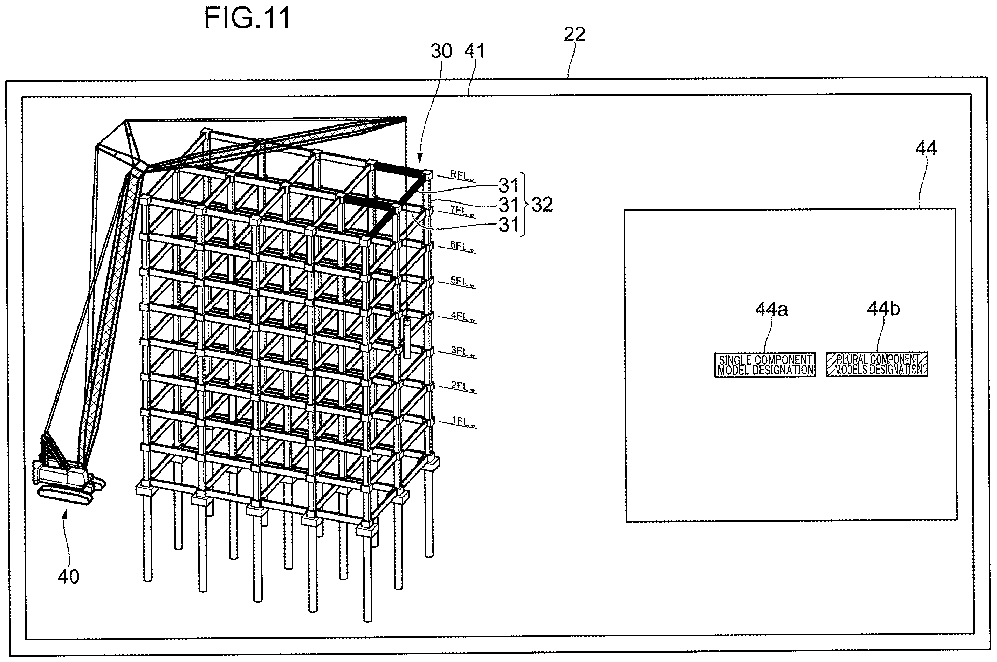

Fig. 11 is an illustration of an example state where a plurality of component models 31 is designated, and the acceptance button 44b is pressed. When the component models 31 are designated from the component model group 32 that constitutes the building model 30 displayed in the model display screen image 41 on the display part 22, the model display control part 111 displays the designated component models 31 in a highlighted manner as illustrated in Fig. 11. The component information acquisition part 221 then acquires information about the component models 31 from the building storage part 2 in response to pressing of the acceptance button 44b in a state where the component models 31 are designated.

A crane calculation part 131 calculates, on the basis of the information about the one component model 31 or the component models 31 acquired by the component information acquisition part 221 and the information about the crane 50 acquired by the crane information acquisition part 122, values related to the crane 50, such as the posture of the crane 50 and a load factor therefor, in attachment of a component corresponding to the one component model 31 or components corresponding to the component models 31 by the crane 50.

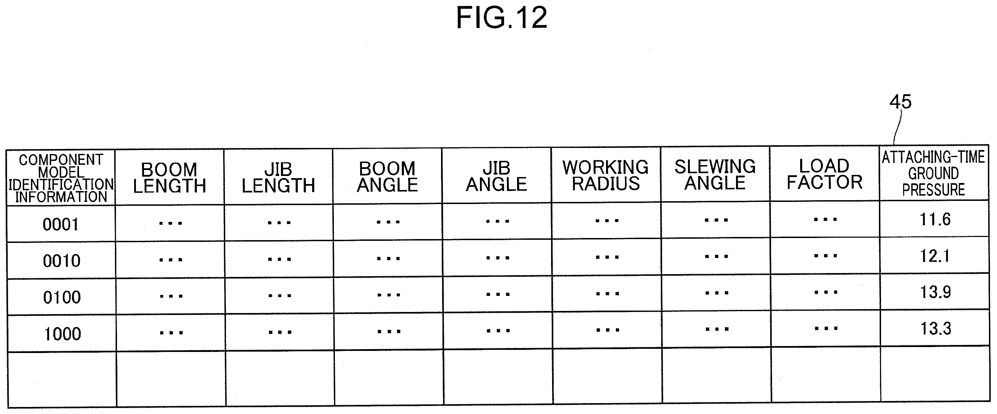

Fig. 12 is a table showing an example crane information screen image 45 displayed on the display part 22 by the crane display control part 212. The crane display control part 212 causes the display part 22 to display a result of a calculation by the crane calculation part 131. The crane display control part 212 displays, in the crane information screen image 45, respective values of a length of a boom 80, a length of a jib 90, an angle of the boom 80, an angle of the jib 90, a working radius, a slewing angle of a slewing body 70, a load factor, and an attaching-time ground contact pressure per designated component model 31.

In the example illustrated in Fig. 12, the crane display control part 212 displays the attaching-time ground contact pressure and other information per component model 31 in a list. Specifically, the crane display control part displays identification information about the designated component models 31 in a column in a vertical direction in the crane information screen image 45 and displays results of calculations for the length of the boom 80, an attaching-time ground contact pressure, and other parameters per component model 31 in a row in a horizontal direction in the screen image.

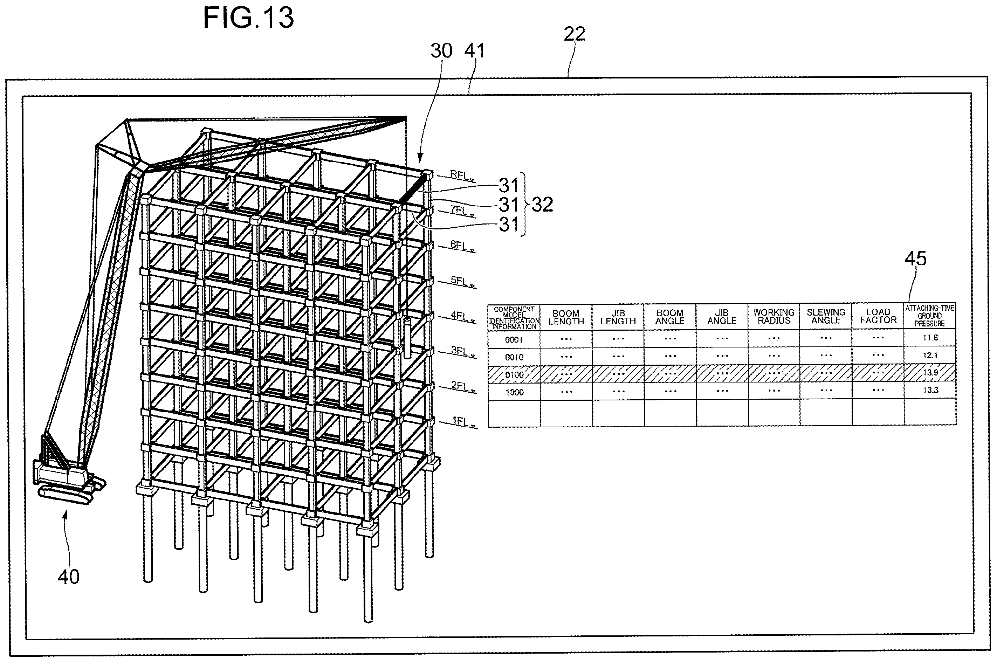

Fig. 13 is an illustration of an example state where one component model 31 is designated from the component models 31. When a specific row showing the one component model 31 is selected from the list (e.g., when the row is clicked by a mouse serving as an example of the manipulation part 23) in the crane information screen image 45, the model display control part 111 displays the selected component model 31 in a highlighted manner (in Fig. 13, the selected component model 31 is filled in black). For instance, this configuration allows the user to grasp a component model 31 requiring the highest attaching-time ground contact pressure among a plurality of designated component models 31.

When a specific row showing one component model 31 is designated from the list in the crane information screen image 45 (e.g., when the row is double-clicked by a mouse serving as an example of the manipulation part 23), the ground contact pressure display control part 113 may cause the display part 22 to display a ground contact pressure detail screen image 43 about the one component model 31. For instance, this configuration allows the user to grasp a maximum ground contact pressure at 360° constituting detail information about a ground contact pressure for a component model 31 requiring the highest attaching-time ground contact pressure among a plurality of designated component models 31.

As described heretofore, the construction planning assistance system 200 includes the component information acquisition part 221 (serving as an example of the third acquisition part) that acquires information about a plurality of component models 31 designated from the component model group 32. An attaching calculation part 132a calculates, on the basis of the information about the component models 31 acquired by the component information acquisition part 221 and the information about the crane 50 acquired by the crane information acquisition part 122, attaching-time ground contact pressures in attachment of a plurality of components respectively corresponding to the component models 31 by the crane 50. The crane display control part 212 causes the display part 22 to display the attaching-time ground contact pressures calculated by the attaching calculation part 132a.

The construction planning assistance system 200 having this configuration enables the user to designate a plurality of component models 31 from the component model group 32 that constitutes the building model 30 having the three-dimensional shape and then confirm, on the display part 22, ground contact pressures in attachment of a plurality of components respectively corresponding to the designated component models 31. The configuration thus allows the user to easily grasp a ground contact pressure required for determination as to whether to protect the ground to support the crane 50 thereon. This consequently enables easy determination on the necessity or unnecessity of protection of the ground to support the crane thereon.

In addition, a program constituting the present invention is a program that includes causing a computer to execute third acquisition of acquiring information about a plurality of component models 31 from the component model group 32. In the program constituting the present invention, the attaching calculation includes calculating, on the basis of the information about the component models 31 acquired in the third acquisition and the information about the crane 50 acquired in the second acquisition, attaching-time ground contact pressures in attachment of a plurality of components respectively corresponding to the component models 31 by the crane 50. Display controlling includes causing the display part 22 to display the attaching-time ground contact pressures calculated in the attaching calculation.

The present invention provides a construction planning assistance system. The construction planning assistance system includes: a first acquisition part that acquires information about at least one component model designated from a component model group that constitutes a building model corresponding to a building, having a three-dimensional shape, and displayed in a three-dimensional virtual space; a second acquisition part that acquires information about a crane arranged in the vicinity of the building for hoisting a component constituting the building; an attaching calculation part that calculates, on the basis of the information about the at least one component model acquired by the first acquisition part and the information about the crane acquired by the second acquisition part, an attaching-time ground contact pressure being a ground contact pressure acting to ground where the crane is arranged in attachment of at least one component corresponding to the at least component model by the crane; and a display control part that causes a display part to display the attaching-time ground contact pressure calculated by the attaching calculation part.

In the construction planning assistance system, the attaching calculation part may calculate a maximum ground contact pressure when the crane slews at 360° in a state of hoisting the at least one member, and the display control part may cause the display part to display the maximum ground contact pressure.

The construction planning assistance system may further include a rising calculation part that calculates a rising-time ground contact pressure being a ground contact pressure acting to the ground in rising of the crane. The display control part may cause the display part to display the rising-time ground contact pressure calculated by the rising calculation part.

In the construction planning assistance system, the display control part may be configured to issue an alert when the attaching-time ground contact pressure calculated by the attaching calculation part has a value exceeding a predetermined threshold.

In the construction planning assistance system, the display control part may be configured to issue an alert when the rising-time ground contact pressure calculated by the rising calculation part has a value exceeding a predetermined threshold.

In the construction planning assistance system, the first acquisition part may be configured to acquire information about a plurality of the component models designated from the component model group. The attaching calculation part may calculate, on the basis of the information about the component models acquired by the first acquisition part and the information about the crane acquired by the second acquisition part, attaching-time ground contact pressures in attachment of a plurality of components respectively corresponding to the component models by the crane. The display control part may cause the display part to display the attaching-time ground contact pressures calculated by the attaching calculation part.

The present invention further provides a program that includes causing a computer to execute predetermined operations. The predetermined operations include: first acquisition of acquiring information about at least one component model designated from a component model group that constitutes a building model corresponding to a building, having a three-dimensional shape, and displayed in a three-dimensional virtual space; second acquisition of acquiring information about a crane arranged in the vicinity of the building for hoisting a component constituting the building; attaching calculation of calculating, on the basis of the information about the at least one component model acquired in the first acquisition and the information about the crane acquired in the second acquisition, an attaching-time ground contact pressure being a ground contact pressure acting to ground where the crane is arranged in attachment of at least one component corresponding to the at least one component model by the crane; and displaying of causing a display part to display the attaching-time ground contact pressure calculated in the attaching calculation.

In the program, the computer may be further caused to execute: in the first acquisition, acquiring information about a plurality of the component models designated from the component model group; in the attaching calculation, calculating, on the basis of the information about the component models acquired in the first acquisition and the information about the crane acquired in the second acquisition, attaching-time ground contact pressures in attachment of a plurality of components respectively corresponding to the component models by the crane; and in the displaying, causing the display part to display the attaching-time ground contact pressures calculated in the attaching calculation.

The present invention provides a construction planning assistance system or other system that enables an easy grasp of a ground contact pressure required for determination as to whether to protect ground.

## Claims

1. A construction planning assistance system, comprising:
a first acquisition part that acquires information about at least one component model designated from a component model group that constitutes a building model corresponding to a building, having a three-dimensional shape, and displayed in a three-dimensional virtual space;
a second acquisition part that acquires information about a crane arranged in the vicinity of the building for hoisting a component constituting the building;
an attaching calculation part that calculates, on the basis of the information about the at least one component model acquired by the first acquisition part and the information about the crane acquired by the second acquisition part, an attaching-time ground contact pressure being a ground contact pressure acting to ground where the crane is arranged in attachment of at least one component corresponding to the at least component model by the crane; and
a display control part that causes a display part to display the attaching-time ground contact pressure calculated by the attaching calculation part.

2. The construction planning assistance system according to claim 1, wherein the attaching calculation part calculates a maximum ground contact pressure when the crane slews at 360° in a state of hoisting the at least one member, and
the display control part causes the display part to display the maximum ground contact pressure.

3. The construction planning assistance system according to claim 1, further comprising a rising calculation part that calculates a rising-time ground contact pressure being a ground contact pressure acting to the ground in rising of the crane, wherein
the display control part causes the display part to display the rising-time ground contact pressure calculated by the rising calculation part.

4. The construction planning assistance system according to claim 1, wherein the display control part is configured to issue an alert when the attaching-time ground contact pressure calculated by the attaching calculation part has a value exceeding a predetermined threshold.

5. The construction planning assistance system according to claim 3, wherein the display control part is configured to issue an alert when the rising-time ground contact pressure calculated by the rising calculation part has a value exceeding a predetermined threshold.

6. The construction planning assistance system according to claim 1, wherein the first acquisition part is configured to acquire information about a plurality of the component models designated from the component model group,
the attaching calculation part calculates, on the basis of the information about the component models acquired by the first acquisition part and the information about the crane acquired by the second acquisition part, attaching-time ground contact pressures in attachment of a plurality of components respectively corresponding to the component models by the crane, and
the display control part causes the display part to display the attaching-time ground contact pressures calculated by the attaching calculation part.

7. A program, comprising:
causing a computer to execute:
first acquisition of acquiring information about at least one component model designated from a component model group that constitutes a building model corresponding to a building, having a three-dimensional shape, and displayed in a three-dimensional virtual space;
second acquisition of acquiring information about a crane arranged in the vicinity of the building for hoisting a component constituting the building;
attaching calculation of calculating, on the basis of the information about the at least one component model acquired in the first acquisition and the information about the crane acquired in the second acquisition, an attaching-time ground contact pressure being a ground contact pressure acting to ground where the crane is arranged in attachment of at least one component corresponding to the at least one component model by the crane; and
displaying of causing a display part to display the attaching-time ground contact pressure calculated in the attaching calculation.

8. The program according to claim 7, wherein the computer is caused to execute:
in the first acquisition, acquiring information about a plurality of the component models designated from the component model group;
in the attaching calculation, calculating, on the basis of the information about the component models acquired in the first acquisition and the information about the crane acquired in the second acquisition, attaching-time ground contact pressures in attachment of a plurality of components respectively corresponding to the component models by the crane; and
in the displaying, causing the display part to display the attaching-time ground contact pressures calculated in the attaching calculation.
